# EUROPEAN PATENT APPLICATION

(11) **EP 3 790 236 A1**
(43) Date of publication of application: **10.03.2021**
(21) Application number: 19812219.4
(22) Date of filing: 20.05.2019
(51) Int. Cl.: H04L 12/721

(54) **PACKET FORWARDING METHOD AND APPARATUS, AND NODE**

(30) Priority: 30.05.2018 CN 201810538690
(71) Applicant: ZTE Corporation, Shenzhen, Guangdong 518057 (CN)
(72) Inventor: PENG, Shaofu, Shenzhen, Guangdong 518057 (CN); JIN, Feicai, Shenzhen, Guangdong 518057 (CN)
(74) Representative: Vinsome, Rex Martin
(86) International application number: PCT/CN2019/087593
(87) International publication number: WO 2019/228209

(57) **Abstract**

Disclosed are a message forwarding method and apparatus, and a node. The method comprises: receiving an Internet Protocol Version 6 (IPv6) message encapsulated by a Segment Routing Header (SRH), by a node with a IPv6 Segment Routing (SRv6) forwarding capacity, wherein the SRH includes a segment list; and determining, by the node, that it is a node corresponding to a penultimate segment in the segment list, and popping the SRH by the node before forwarding the IPv6 message.

## Description

### CROSS REFERENCE TO RELATED APPLICATIONS

The present disclosure claims priority to Chinese patent application No. 201810538690.4, filed before China National Intellectual Property Administration on May 30, 2018, the entire contents of which are incorporated herein by reference.

### TECHNICAL FIELD

The present disclosure relates to the field of data communication, in particular, to a message forwarding method and apparatus, and a node.

### BACKGROUND

Among standards related to routing technology, draft-ietf-spring-segment-routing-15 describes an architecture for segment routing. The segment routing technology enables a node to specify a forwarding path for a specific message instead of forwarding according to a general shortest path. By adding information related to a segment list composed of segment IDs (SID) to the message, state information of each path is not required to be maintained on an intermediate node.

Draft-fils-spring-srv6-network-programming-03 describes how to apply segment routing to an Internet Protocol Version 6 (IPv6) forwarding plane, i.e., IPv6 segment routing (SRv6). By inserting a segment routing header (SRH) of a routing extension header into an IPv6 message, a segment list represented by an IPv6 address list is included in the SRH, a destination address of the message may be updated segment by segment, and a segment-by-segment forwarding is completed. The draft defines some SIDs with different functions, where corresponding variants of a penultimate segment pop of the SRH (PSP) and an ultimate segment pop of the SRH (USP) are further defined for three SIDs of function types: END, END.X and END.T. The PSP refers to popping up the SRH in advance when the message arrives at the node corresponding to the penultimate segment in the SRH, which is similar to a penultimate hop pop (PHP) mechanism of multi-protocol label switching (MPLS) forwarding; and the USP refers to popping the SRH when the message arrives at the node corresponding to the ultimate segment in the SRH.

In order to support PSP or USP, draft-bashandy-isis-srv6-extensions-01 defines how to flood SIDs of function types such as END, END.X within an interior gateway protocol (IGP) area and carry a PSP or USP flag, and when the subsequent message arrives at the node corresponding to the penultimate segment in the SRH for processing, whether to pop the SRH in advance is determined according to whether the entry corresponding to the last SID contains the PSP or USP flag.

In the current standard, PSP (or USP) is associated with specific SIDs (but not SIDs of all function types, such as SIDs related to virtual private network (VPN) services), where the SIDs can be flooded within an IGP area or are suitable for being flooded within an IGP domain, so the current standard may not support PSP for SIDs of all function types.

### SUMMARY

Embodiments of the present disclosure provide a message forwarding method and apparatus, and a node, and provide a PSP mechanism supporting SIDs of all function types for a PSP which only supports the SID of limited function types in the relevant standard.

An embodiment of the present disclosure provides a message forwarding method, including:
receiving an Internet Protocol Version 6 (IPv6) message encapsulated by a Segment Routing Header (SRH), by a node with a IPv6 Segment Routing (SRv6) forwarding capacity, wherein the SRH includes a segment list; and
determining, by the node, that it is a node corresponding to a penultimate segment in the segment list, and popping, by the node, the SRH before forwarding the IPv6 message.

An embodiment of the present disclosure further provides a message forwarding apparatus, including:
a receiving module configured to receive an Internet Protocol Version 6 (IPv6) message including a Segment Routing Header (SRH), wherein the SRH includes a segment list; and
a forwarding module configured to determine that the node is a node corresponding to the penultimate segment in the segment list, and pop the SRH before forwarding the IPv6 message.

An embodiment of the present disclosure further provides a node, including:
a processor;
a memory configured to store instructions executable by the processor; and
a transmission apparatus, configured to perform an information transmitting/receiving communication with control of the processor;
wherein the processor is configured to perform the following operations:
   controlling the transmission apparatus to receive an Internet Protocol Version 6 (IPv6) message encapsulated by a Segment Routing Header (SRH), wherein the SRH includes a segment list; and
   determining that the node is a node corresponding to the penultimate segment in the segment list, and popping the SRH before controlling the transmission apparatus to forward the IPv6 message.

### BRIEF DESCRIPTION OF THE DRAWINGS

The accompanying drawings are used to provide a further understanding to the technical solution of the present disclosure. The drawings constitute a part of the specification and serve to explain the technical solution of the present disclosure together with the embodiments of the present disclosure, but they do not constitute a limitation on the technical solution of the present disclosure.
FIG. 1 is a flowchart illustrating a message forwarding method according to an embodiment of the present disclosure;
FIG. 2 is a flowchart illustrating another message forwarding method according to an embodiment of the present disclosure;
FIG. 3 is a network topology diagram illustrating an application instance 1 of the present disclosure;
FIG. 4 is a network topology diagram illustrating an application instance 2 of the present disclosure;
FIG. 5 is a schematic diagram illustrating a message forwarding apparatus according to an embodiment of the present disclosure;
FIG. 6 is a schematic structural diagram illustrating a node provided by an embodiment of the present disclosure.

### DETAILED DESCRIPTION

Embodiments of the present disclosure are described in detail below with reference to the accompanying drawings. It should be noted that the embodiments in the present disclosure and the features in the embodiments may be arbitrarily combined with each other if there is no conflict.

The steps shown in the flowchart of the accompanying drawings may be performed in a computer system such as a set of computer-executable instructions. Moreover, although a specific logical order is shown in the flowchart, in some cases, the steps shown or described may be performed in a different order.

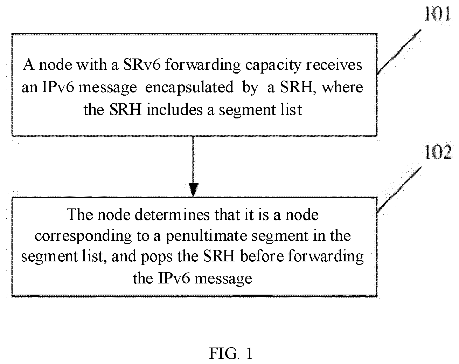

As shown in FIG. 1, the message forwarding method of the embodiment of the present disclosure includes:

In step 101, a node with a SRv6 forwarding capacity receives an IPv6 message encapsulated by a SRH, where the SRH includes a segment list (Segment List).

In step 102, the node determines that it is a node corresponding to a penultimate segment in the segment list, and pops the SRH before forwarding the IPv6 message.

In the embodiment of the present disclosure, a PSP in the SRv6 is implemented as a node capability for decoupling from a specific SID. The node with the SRv6 forwarding capability may pop the SRH in advance when finding that it is a node corresponding to the penultimate Segment in the SRH as parsing the message encapsulated by the SRH, thus SIDs of all function types can support the PSP, and the support for PSP is more comprehensive and thorough.

In an embodiment, a switch with SRv6 PSP capability is configured on the node with the SRv6 forwarding capability.

In this way, the switch with SRv6 PSP capability may be set to be on or off as needed.

Correspondingly, the node determines that it is a node corresponding to the penultimate segment in the segment list and determines that the switch with SRv6 PSP capability is turned on, and then the node pops the SRH before forwarding the IPv6 message.

In an embodiment, before the node determines that it is the node corresponding to the penultimate segment in the segment list, the method further includes:

determining, by the node, that an IPv6 destination address (DA) in the IPv6 message is an address of the node itself.

If the node determines that the IPv6 DA is not an address of its own, the message is forwarded according to the shortest path.

In an embodiment, the node determines that it is the node corresponding to the penultimate segment in the segment list, according to a value of a Segment Left field in the SRH

With respect to the value of the Segment Left field, there are three cases as follows:

### 1. The value of the Segment Left field is 0

In this case, the node determines that it is a node corresponding to the last segment in the segment list and pops the SRH, and loads encapsulated by the SRH are processed.

### 2. The value of the segment left field is 1

In this case, the node determines that it is the node corresponding to the penultimate segment in the segment list.

When the value of the Segment Left field is 1, the value of the Segment Left field is decreased by 1, the IPv6 DA is updated with an IPv6 address corresponding to the next segment in the segment list, and the IPv6 message is forwarded according to the updated IPv6 DA. The SRH is popped before forwarding.

### 3. The value of the Segment Left field is greater than 1

In this case, the node determines that it is a node corresponding to another segment in the segment list other than the second segment and the last segment, the value of the segment left field is decreased by 1, the IPv6 DA is updated with an IPv6 address corresponding to the next segment in the segment list, and the IPv6 message is forwarded according to the updated IPv6 DA.

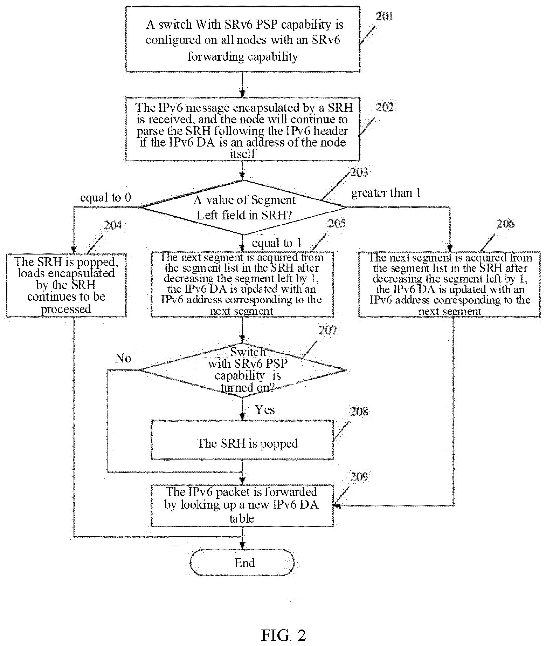

FIG. 2 is a flowchart illustrating another message forwarding method according to an embodiment of the present disclosure, which includes the following steps:

In step 201, a switch with SRv6 PSP capability is configured on all nodes with a SRv6 forwarding capability.

Herein, if the switch with SRv6 PSP capability is not configured on a node, the node is regarded by default as not having the SRv6 PSP capability, that is, the node is regarded by default as only having a SRv6 USP capability.

In step 202, the node with the SRv6 forwarding capability receives an IPv6 message encapsulated by a SRH, and the node will continue to parse the SRH following the IPv6 header if the IPv6 DA is an address of the node itself.

In step 203, the value of a Segment Left field in the SRH is checked. If the value of the Segment Left field is equal to 0, step 204 is performed; if the value of the Segment Left field is equal to 1, step 205 is performed; and if the value of the Segment Left field is greater than 1, step 206 is performed.

In step 204, the node is a node corresponding to the last Segment in the Segment List in the SRH, and at this time, the SRH is popped (i.e., stripped), loads encapsulated by the SRH continues to be processed, and the process is ended.

In step 205, the node is a node corresponding to the penultimate Segment in the segment list in the SRH, the Segment Left is decreased by 1, and then the next Segment is acquired from the Segment List in the SRH, the IPv6 DA is updated with an IPv6 address corresponding to the next Segment, and then the step 207 is performed.

In step 206, the node is a node corresponding to a Segment in the segment list other than the penultimate Segment and the last Segment, the Segment Left is decreased by 1, and then the next Segment is acquired from the Segment List in the SRH, and the IPv6 DA is updated with an IPv6 address corresponding to the next segment, and then the step 209 is performed.

In step 207, whether the switch with SRv6 PSP capability is turned on is detected, and if the switch with SRv6 PSP capability is turned on, step 208 is performed; if the switch with SRv6 PSP capability is not turned on, step 209 is performed.

In step 208, the SRH is popped.

In step 209, the IPv6 message is forwarded by looking up a new IPv6 DA table, and the process is ended.

Several application instances are described below for illustration.

### Application instance 1

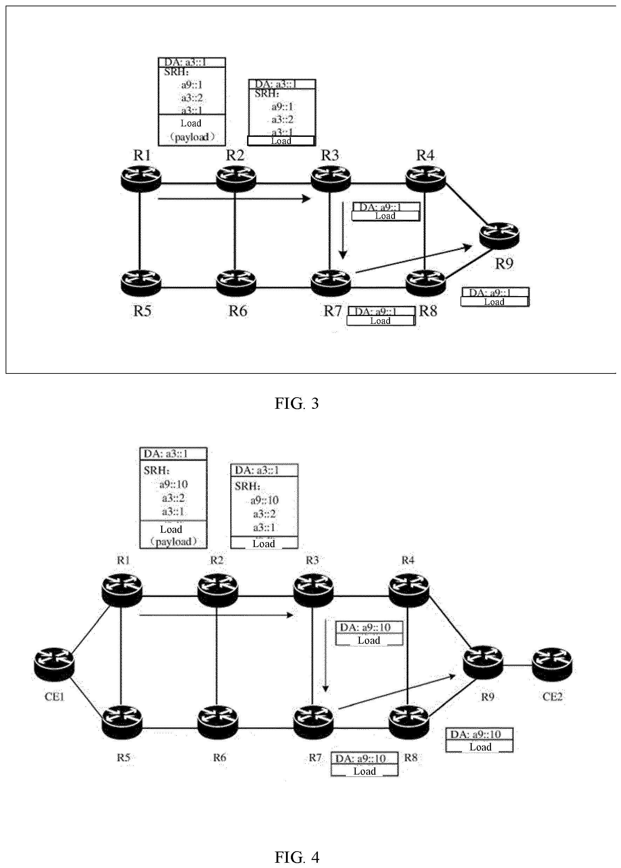

As shown in the network topology diagram in FIG. 3, a SRv6-Traffic Engineering (TE) path from R1 to R9 is established, and the path information is <node-R3, link-R3R7, node-R9>, then a message forwarded along the path will be forwarded to a node R3 along a shortest path, then to a node R7 along a link R3R7, and finally to a node R9 along the shortest path. It is assumed that an END SID is configured as a3::1 on the node R3, an END.X SID is configured as a3::2 on the node R3 for the link R3R7, and the END SID may be configured as a9::1 on the node R9 similarly. The message forwarding steps are as follows:

In step 301, a switch with SRv6 PSP capability is configured to be turned on on the nodes R1, R3, and R9 with the SRv6 forwarding capability, so that when parsing a message encapsulated by a SRH, these nodes may pop the SRH in advance when finding themselves as nodes corresponding to the penultimate segment in the SRH.

In step 302, when R1 imports traffic to the above created SRv6-TE path, it will directly encapsulate an IPv6 header + SRH before loading, where the Segment List in the SRH is {a3:: 1, a3::2, a9::1}, and an initial value of the Segment Left in the SRH is 3. DA in the IPv6 header is first copied as the first Segment, namely a3::1, the Segment Left field in the SRH is decreased by 1 to be 2, and the message is forwarded to the destination R3 node along the shortest path.

In step 303, the message arrives at R2. The node R2 is not in the Segment List, and it does not have to support SRv6 function. R2 continues to forward the message to R3 along the shortest path.

In step 304, when the message arrives at R3, it is found that the IPv6 DA (a3:: 1) hits a local SID entry (a3::1/128) locally maintained by R3, and its function is END Therefore, R3 continues to acquire the next segment (a3::2) according to the Segment Left in the SRH after being decreased by 1 (the Segment Left will become 1 after being decreased by 1), and copies the next segment to DA. The message continues to be forwarded by looking up the routing table.

In step 305, it is found that DA (a3::2) continues to hit the local SID entry (a3::2/128) locally maintained by R3, and its function is END.X. Therefore, R3 continues to acquire the next Segment (a9:: 1) according to the Segment Left in the SRH after being decreased by 1 (the Segment Left will become 0 after being decreased by 1, then it is found that R3 is the node corresponding to the penultimate segment), and copies the next segment to DA. Before continuously forwarding the message to the link R3R7, R3 detects that the switch with SRv6 PSP capability is turned on by checking its configuration, then forwards the message after popping the SRH in advance.

In step 306, the message arrives at R7, and R7 continues to forward the message to R8 according to the shortest path.

In step 307, the message arrives at R8, and R8 continues to forward the message to R9 according to the shortest path.

In step 308, when the message arrives at R9, it is found that IPv6 DA (a9::1) hits local SID entry (a9::1/128) locally maintained by R9, and its function is END. R9 removes the IPv6 header and continues to process loads encapsulated by the IPv6 header.

### Application instance 2

A network topology diagram as shown in FIG. 4 describes a message forwarding for L3VPN over SRv6-TE. CE in the figure represents a customer edge, and the configuration of public network is the same as that in embodiment 1. Taking VPNv4 over SRv6-TE as an example, END.DT4 SID may be configured on R9 as a9::10 for a virtual routing forwarding (VRF) instance. In addition, a tunnel policy may be configured on R1 for the VRF, so that the VPN route is forcibly iterated to the SRv6-TE path, or R9 carries a color extended community attribute of border gateway protocol (BGP) when notifying the VPN route to R1, which also makes R1 iterate the VPN route to the SR-TE path having the corresponding color and with the destination address of R9. R1 iterates the VPN route to the SR-TE path, and the Segment List corresponding to the SR-TE path is {a3::1, a3::2, a9::1}. When forwarding the message, SRv6 VPN SID (a9::10) may be added to the tail of the message, therefore obtaining {a3::1, a3::2, a9::1, a9::10}. However, R1 may remove a9::1 by optimization to obtain simplified {a3::1, a3::2, a9::10}. The message forwarding steps are as follows:

In step 401, on the nodes R1, R3, and R9 supporting an SRv6 forwarding capability, a switch with SRv6 PSP capability is configured and turned on, so that when parsing a message encapsulated by an SRH, these nodes may pop the SRH in advance when finding themselves as the node corresponding to the penultimate segment in the SRH.

In step 402, when R1 imports VPN traffic to the above created SRv6-TE path, it will directly encapsulate an IPv6 header + SRH before loading, where the Segment List contained in the SRH is {a3::1, a3::2, a9::10}, and an initial value of Segment Left in the SRH is 3. DA in the IPv6 header is first copied as the first segment, namely a3::1, and the Segment Left field in the SRH is decreased by 1 to be 2, and the message is forwarded to the destination R3 node along the shortest path.

In step 403, the message arrives at R2. The node R2 is not in the Segment List, and it does not have to support SRv6 function. R2 continues to forward the message to R3 according to the shortest path.

In step 404, when the message arrives at R3, it is found that the IPv6 DA (a3::1) hits a local SID entry (a3::1/128) locally maintained by R3, and its function is END. Therefore, R3 continues to acquire the next segment (a3::2) according to the Segment Left in the SRH after being decreased by 1 (the Segment Left will become 1 after being decreased by 1), and copies the next segment to DA. The message continues to be forwarded by looking up the routing table.

In step 405, it is found that DA (a3::2) continues to hit a local SID entry (a3::2/128) locally maintained by R3, and its function is END.X. Therefore, R3 continues to acquire the next segment (a9:: 10) according to the Segment Left in the SRH after being decreased by 1 (the Segment Left will become 0 after being decreased by 1, then it is found that R3 is the node corresponding to the penultimate segment), and copies the next segment to DA. Before continuously forwarding the message to the link R3R7, R3 detects that the switch with SRv6 PSP capability is turned on by checking its configuration,, then forwards the message after popping the SRH in advance.

In step 406, the message arrives at R7, and R7 continues to forward the message to R8 according to the shortest path.

In step 407, the message arrives at R8, and R8 continues to forward the message to R9 according to the shortest path.

In step 408, when the message arrives at R9, it is found that IPv6 DA (a9:: 10) hits local SID entry (a9::1/128) locally maintained by R9, and its function is END.DT4. R9 removes the IPv6 header and continues to forward by looking up the corresponding VPN routing table based on inner layer load.

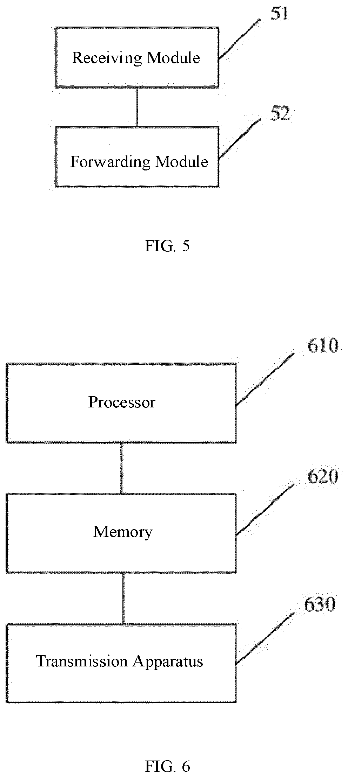

As shown in FIG. 5, an embodiment of the present disclosure further provides a message forwarding apparatus, which is applied to a node with a SRv6 forwarding capability, including:
a receiving module 51 configured to receive an Internet Protocol Version 6 (IPv6) message including a Segment Routing Header (SRH), wherein the SRH includes a segment list; and
a forwarding module 52 configured to determine that the node is a node corresponding to the penultimate segment in the segment list, and pop the SRH before forwarding the IPv6 message.

In an embodiment, the apparatus further includes: a configuration module configured to configure a switch with SRv6 PSP capability.

In an embodiment, the forwarding module 52 is further configured to determine that the node is a node corresponding to the penultimate segment in the segment list and the switch with SRv6 PSP capability is turned on, and pop the SRH before forwarding the IPv6 message.

In an embodiment, the forwarding module 52 is further configured to determine that an IPv6 DA in the IPv6 message is an address of the node itself, determine that the node is a node corresponding to the penultimate segment in the segment list, and pop the SRH before forwarding the IPv6 message.

In an embodiment, the forwarding module 52 is configured to determine that the node is a node corresponding to the penultimate segment in the segment list, if a value of a segment left field in the SRH is 1.

In an embodiment, the forwarding module 52 is further configured to determining that the value of the Segment Left field is 1, decrease the value of the Segment Left field by 1, update the IPv6 DA with an IPv6 address corresponding to the next segment in the segment list, and forward the IPv6 message according to the updated IPv6 DA.

In an embodiment, the forwarding module is further configured to determine that the node is a node corresponding to the last segment in the segment list, pop the SRH, if the value of the Segment Left field in the SRH is 0, and process loads encapsulated by the SRH.

In an embodiment, the forwarding module is further configured to determine that the node is a node corresponding to a segment in the segment list other than the second segment and the last segment, if the value of the Segment Left field in the SRH being greater than 1, decrease the value of the Segment Left field by 1, update the IPv6 DA with the IPv6 address corresponding to the next segment in the segment list, and forward the IPv6 message according to the updated IPv6 DA.

In the embodiment of the present disclosure, the PSP in the SRv6 is implemented as a node capability for decoupling from a specific SID. The node with the SRv6 forwarding capability may pop the SRH in advance when finding that it is a node corresponding to the penultimate segment in the SRH when parsing the message encapsulated by the SRH. Thus SIDs of all function types can support the PSP, and the support for PSP is more comprehensive and thorough.

As shown in FIG. 6, an embodiment of the present disclosure further provides a node, including:
a processor 610;
a memory 620 configured to store instructions executable by the processor; and
a transmission apparatus 630 configured to perform an information transmitting/receiving communication with control of the processor;
where the processor 610 is configured to perform the following operations:
controlling the transmission apparatus 630 to receive an IPv6 message which encapsulated by a SRH, where the SRH includes a segment list; and
determining that the node is a node corresponding to the penultimate segment in the segment list, and popping the SRH before controlling the transmission apparatus 630 to forward the IPv6 message.

In an embodiment, the node may perform the method described in any of the above embodiments.

An embodiment of the present disclosure further provides a computer-readable storage medium storing computer executable instructions, where the computer executable instructions are configured to execute the message forwarding method.

It can be understood by those skilled in the art that all or some of the steps of the method, systems and functional modules/units in the apparatus disclosed above may be implemented as software, firmware, hardware and appropriate combinations thereof. In the hardware implementation, the division between functional modules/units mentioned in the above description does not necessarily correspond to the division of physical components. For example, a physical component may have multiple functions, or a function or step may be cooperatively performed by multiple physical components. Some or all of the components may be implemented as software executed by a processor, such as a digital signal processor or a microprocessor, or as hardware, or as an integrated circuit, such as an application specific integrated circuit. Such software may be distributed on a computer-readable medium, which may include computer storage media (or non-transitory media), and communication media (or transitory media). As well known to those of ordinary skill in the art, the term computer storage medium includes volatile and nonvolatile, removable and non-removable media implemented in any method or technology for storing information (such as computer-readable instructions, data structures, program modules or other data). Computer storage media include, but are not limited to, random access memory (RAM), read-only memory (ROM), electrically erasable programmable read-only memory (EEPROM), flash memory or other memory technologies, compact disc read-only memory (CD-ROM), digital video disc (DVD) or other optical disk storage, magnetic boxes, magnetic tapes, magnetic disk storage or other magnetic storage apparatus, or any other medium that may be used to store desired information and may be accessed by computers. Furthermore, it is a common knowledge for those of ordinary skill in the art that communication media typically contain computer readable instructions, data structures, program modules or other data in a modulated data signal such as a carrier wave or other transmission mechanism, and may include any information delivery media.

## Claims

1. A message forwarding method, comprising:
receiving an Internet Protocol Version 6 (IPv6) message encapsulated by a Segment Routing Header (SRH), by a node with a IPv6 Segment Routing (SRv6) forwarding capacity, wherein the SRH includes a segment list; and
determining, by the node, that the node is a node corresponding to a penultimate segment in the segment list, and popping the SRH by the node before forwarding the IPv6 message.

2. The method of claim 1, further comprising:
configuring a switch with SRv6 Penultimate Segment Pop of SRH (SRv6 PSP) capability on the node with SRv6 forwarding capability.

3. The method of claim 2, before popping the SRH, the method further comprising:
determining, by the node, that the switch with SRv6 PSP capability is turned on.

4. The method of claim 1, before the node determining that it is the node corresponding to the penultimate segment in the segment list, the method further comprising:
determining, by the node, that an IPv6 destination address (DA) in the IPv6 message is an address of the node itself.

5. The method of claim 1, wherein the node determining that it is a node corresponding to the penultimate segment in the segment list, comprises:
if a value of a Segment Left field in the SRH is 1, determining that it is a node corresponding to the penultimate segment in the segment list.

6. The method of claim 5, after the node determining that it is a node corresponding to the penultimate segment in the segment list, the method further comprising:
decreasing the value of the Segment Left field by 1, updating an IPv6 destination address (DA) with an IPv6 address corresponding to a next segment in the segment list, and forwarding the IPv6 message according to the updated IPv6 DA.

7. The method of any one of claims 1 to 6, further comprising:
if a value of a Segment Left field in the SRH is 0, determining that the node is a node corresponding to a last segment in the segment list, popping the SRH, and processing loads encapsulated by the SRH.

8. The method of any one of claims 1 to 6, further comprising:
if a value of a Segment Left field in the SRH is greater than 1, determining that the node is a node corresponding to a segment in the segment list other than the second segment and the last segment, decreasing the value of the Segment Left field by 1, updating an IPv6 destination address (DA) with an IPv6 address corresponding to a next segment in the segment list, and forwarding the IPv6 message according to the updated IPv6 DA.

9. A message forwarding apparatus, comprising:
a receiving module configured to receive an Internet Protocol Version 6 (IPv6) message including a Segment Routing Header (SRH), wherein the SRH includes a segment list; and
a forwarding module configured to determine that the node is a node corresponding to the penultimate segment in the segment list, and pop the SRH before forwarding the IPv6 message.

10. A node, comprising:
a processor;
a memory configured to store instructions executable by the processor; and
a transmission apparatus, configured to perform an information transmitting/receiving communication with control of the processor;
wherein the processor is configured to perform the following operations:
controlling the transmission apparatus to receive an Internet Protocol Version 6 (IPv6) message encapsulated by a Segment Routing Header (SRH), wherein the SRH includes a segment list; and
determining that the node is a node corresponding to the penultimate segment in the segment list, and popping the SRH before controlling the transmission apparatus to forward the IPv6 message.

11. A storage medium storing a computer program, wherein the computer program is configured to execute the method according to any one of claims 1 to 8 when running.
